# EUROPEAN PATENT APPLICATION

(11) **EP 1 820 409 A1**
(43) Date of publication of application: **22.08.2007**
(21) Application number: 06001417.2
(22) Date of filing: 24.01.2006
(51) Int. Cl.: A23L 1/40, A23L 1/0534

(54) **A bouillon and/or seasoning tablet**

(71) Applicant: NESTEC S.A., 1800 Vevey (CH)
(72) Inventor: Palzer, Stefan, 78337 Oehningen (DE); Kehlenbeck, Volker, 78247 Hilzingen (DE)
(74) Representative: Thomas, Alain

(57) **Abstract**

The present invention concerns a bouillon and/or seasoning tablet, which comprises, in total % in weight , 1-10% oil, and/or 1-5% fat, binders, salt, between 2 and 3 % of total water, as well as optionally spices, flavors, dehydrated vegetables, herb leafs and/or plant extracts and between 0.5 and 8 % of vegetable or cereal fibers.

## Description

The present invention concerns a bouillon and/or seasoning tablet, as well as a process for the production of said tablets.

The normal way to produce a bouillon and/or seasoning tablet is to homogenize the ingredients of the recipe in a mixer using a certain sequence. Water is often an integral part of the recipe. During this operation, some crusts and sometimes also lumps occur in said mixer, which provokes afterwards some obligation of stopping the facility to clean intensively. Furthermore, by the tabletting being carried out after, the presence of lumps in the produced mass causes weight variations of the produced tablets and as a consequence variations of the tablet hardness. In addition, the water is not distributed homogenously so that there are hardness variations within the tablet structure. Lumps in the tablets cause problems during the dissolution of said tablets even in hot water. The solubility of said tablets is thus often not satisfying for the consumer.

The objective of the present invention is to produce a tablet, wherein there is no more crust formation in the mixer and wherein there is no more lumps in the produced mass as well as in the final tablets. This result is achieved preferably by adding wetted fibers to a mixture of all the ingredients. Preferably the fibers are added at the end of the mixing. However, the fibres can also be added during earlier mixing steps accepting a higher risk of encrustation of the mixing equipment.

The present invention concerns a bouillon and/or seasoning tablet, which comprises, in total % in weight , 1-10% oil or 1-5% fat, binders, salt, between 2 and 3 % of total water, as well as optionally spices, flavors, dehydrated vegetables, herb leaves and/or plant extracts and between 0.5 and 8 % of vegetable or cereal fibers. The tablet preferably contains between 0.5 and 2 % of vegetable or cereal fibers.

The expression tablet in the present description means "tablet or cube obtained by pressing a bouillon or seasoning powder, preferably a free flowing powder, into a tablet or cube form".

The expression "oil" means "oil or mixture of oils which is liquid at room temperature and which more especially has a solid fat content (SFC) of less than 5 % at 20°C".

The expression binders means "the addition of ingredients which (combined with an adequate increase of the water activity, aw value) be subject to a glass transition and support as a consequence the binding.".

The vegetable and cereal fibers contain up to 90 % of cellulose. Preferably, these fibers contain more than 50 % of cellulose. Most preferably, these fibers contain between 65 % and 80 % of cellulose.

There is no limitation in the choice of the fibers used. But, preferably these fibers are obtained from carrot, tomato, potato, oat, wheat or cassava. Most preferably, the fibers used are carrot fibers.

According to the invention, the fat and oil content of the tablet is comprised between 1 and 15 % in weight. Preferably, there is a minimum of fat in the tablet, that means from the whole fat and oil content, there is less than 50 % of fat. Preferably the fat content is of less than 40 %.

There is no limitation in the choice of the oil. Preferably, the oil is taken from the group consisting of sunflower oil, olive oil, maize oil and canola oil.

With the new tablet according to the invention, it is possible to produce a tablet having a better solubility in water. In hot water the dissolution of a vegetable bouillon tablet according to the invention (10.5 g) containing carrot fibers took about 60 s. The dissolution of a comparable tablet without carrot fibers took about 100 s. The dissolution was measured with a ERWEKA ZT71.

The binders are taken from the group consisting of meat extract, processed flavors, citric acid and maltodextrin. Processed flavors are flavors obtained by reaction which are containing major amounts of amorphous substances and which are thus showing a glass transition temperature.

The tablet of the invention can also comprise Monosodiumglutamate (MSG) and/or sugar.

The spices can be any type of spices. For example, pepper, curry, ginger, paprika, cloves and nutmeg are used. The flavors used are common top, middle and base notes.
The dehydrated vegetables are any type of vegetables, for example tomato, onion, paprika, leek, garlic and carrot pieces or powders.

As herb leaves, we use preferably e.g. oregano, thyme, tarragon, rosemary, chervil, parsley, chive, corianderFinally, concerning the plant extracts, e.g. lovage, oregano, nutmeg, laurel, pepper, paprika and onion extract are introduced in the mixture.

The present invention concerns furthermore the process for the production of the above described tablets, wherein the fibres are wetted with a saturated water/salt solution by spraying said saturated solution on the fibres, the wetted fibres are then mixed with all the other ingredients and the obtained mixture is tabletted. At least a short storage of a few hours is required to allow the fibres to exchange water with the other components of the mix.

The saturated salt solution contains preferably about 20 to 35 % in weight of salt. The salt used is preferably sodium chloride. For sodium chloride, the saturated solution contains preferably about 25 to 28 % in weight of salt. But every other food grade salt which decreases the water activity of the solution below 0.8 can be used. For sodium chloride, the water activity of the used solution is preferably between 0.72 and 0.8.

### Example 1:

A pre-mix of wetted carrot fibers is produced by spraying a saturated water/salt solution (about 36 g sodium chloride per 100 g water) on Carrot Fibers. The wetting takes place in a low shear or a high shear mixer. The mixer can be continuous or discontinuous.

To produce the bouillon or seasoning mass, the ingredients of the recipe as for example about (in total percent in weight) 40 % sodium chloride, about 15 % of mono sodium glutamate, about 2.3 % sunflower oil, about 20 % of maltodextrin as well as different vegetable pieces and herb leaves, spices and flavors are mixed in a low shear or a high shear mixer. Afterwards, a certain amount of the pre-mix containing the wetted carrot fibers is added to the bouillon or seasoning mass and the mixing starts again.

### Example 2:

A pre-mix of wetted oat fibers is produced by spraying a saturated water/salt solution (about 36 g sodium chloride per 100 g water) on oat fibers. The wetting takes place in a low shear or a high shear mixer. The mixer can be continuous or discontinuous.
To produce the bouillon or seasoning mass, the ingredients of the recipe as for example about (in total percent in weight) 43 % sodium chloride, about 16 % of mono sodium glutamate, about 5 % olive oil, about 22 % of maltodextrin as well as different vegetable pieces and herb leaves, spices and flavors are mixed in a low shear or a high shear mixer. Afterwards, a certain amount of the pre-mix containing the wetted oat fibers is added to the bouillon or seasoning mass and the mixing starts again.

## Claims

1. A bouillon and/or seasoning tablet, which comprises, in total % in weight , 1-10% oil, and/or 1-5% fat, binders, salt, between 2 and 3 % of total water, as well as optionally spices, flavors, dehydrated vegetables, herb leafs and/or plant extracts and between 0.5 and 8 % of vegetable or cereal fibers.

2. A bouillon and/or seasoning tablet according to claim 1, wherein the fibers contain up to 90 % of cellulose.

3. A bouillon and/or seasoning tablet according to claims 1 or 2, wherein the fibers are taken from the group consisting of carrot, tomato, potato, oat, wheat rice and Cassava fibers.

4. A bouillon and/or seasoning tablet according to any of claims 1 to 3, wherein the content of fat and oil is comprised between 1 and 15 %.

5. A bouillon and/or seasoning tablet according to claim 4, wherein the content of fat is lower than 50 % of the total fat and oil content.

6. A bouillon and/or seasoning tablet according to any of claims 1 to 5, wherein the oil is selected from the group consisting of sunflower oil, olive oil, maize oil and canola oil.

7. A bouillon and/or seasoning tablet according to any of claims 1 to 6, wherein the binders are taken from the group consisting of meat extract, processed flavors, citric acid and maltodextrin.

8. A bouillon and/or seasoning tablet according to any of claims 1 to 7, wherein it contains MSG and/or sugar.

9. A process for the production of a product according to any of claims 1 to 8, wherein the fibres are wetted with a saturated salt solution by spraying said saturated solution on the fibres, the wetted fibres are then mixed with all the other ingredients and the obtained mixture is tabletted.
